## Europäisches Patentamt
## European Patent Office
## Office européen des brevets

(19)

(11) Veröffentlichungsnummer: **0 451 305 A1**

# (12) EUROPÄISCHE PATENTANMELDUNG

(21) Anmeldenummer: 90106712.4

(51) Int. Cl.5: **B23H 7/28**

(22) Anmeldetag: 07.04.90

(43) Veröffentlichungstag der Anmeldung:
**16.10.91 Patentblatt 91/42**

(84) Benannte Vertragsstaaten:
**AT CH DE FR GB IT LI NL**

(71) Anmelder: **Dr. Johannes Heidenhain GmbH**
**Dr.-Johannes-Heidenhain-Strasse 5 Postfach**

1260
**W-8225 Traunreut(DE)**

(72) Erfinder: **Fraunhofer, Hermann, Dipl.-Ing. (FH)**
**Obergarching 102**
**W-8268 Garching a. d. Alz(DE)**

(54) **Erodierverfahren.**

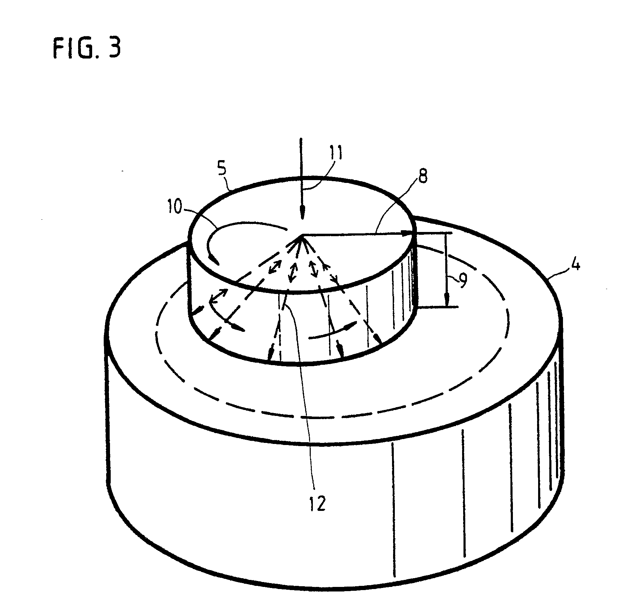

(57) Gemäß Figur 3 wird bei diesem Erodierverfahren einer Bewegung in Richtung der Erodierachse eine planetäre Bewegung überlagert. Die Regelung des Erodierspaltes erfolgt auf der Resultierenden (12) beider Richtungskomponenten (8 bzw. 9).

FIG. 3

EP 0 451 305 A1

Die Erfindung bezieht sich auf ein Bearbeitungsverfahren gemäß dem Oberbegriff des Anspruches 1.

Erodierverfahren sind abtragende Bearbeitungsverfahren, bei denen durch elektrische Entladungsvorgänge zwischen einer Werkzeugelektrode und einem elektrisch leitenden Werkstück unter einem Arbeitsmedium Abtragungen zum Zwecke der Bearbeitung hervorgerufen werden.

Beim Planetärerodieren sind der vom Senkerodieren her bekannten geradlinigen Bewegung räumlich-laterale Bewegungen zwischen Werkzeugelektrode und Werkstück überlagert. Die räumlich-laterale Bewegung beim Planetärerodieren bewirkt verbesserte Arbeitsbedingungen und Arbeitsergebnisse. Durch die zusätzliche Translationsbewegung werden die Spülbedingungen im Arbeitsmedium verbessert, so daß störende Fehlentladungen durch abgetragenes Material zwischen Werkzeugelektrode und Werkstück vermieden werden können. Darüber hinaus kann die Spaltweite zwischen Werkzeugelektrode und Werkstück zur Vermeidung von Fehlentladungen schnell ausgeregelt werden, weil die Elektrode auch lateral zurückgezogen werden kann.

Beim kontinuierlichen Erodieren wird die Werkzeugelektrode in bezug auf das Werkstück entsprechend der jeweiligen Spaltweite des Erosionsspaltes soweit wie möglich nach außen gezwungen und gleichzeitig mit annähernd konstanter Winkelgeschwindigkeit an der zu erodierenden Fläche vorbeibewegt. Die Regelung der Spaltweite des Erosionsspaltes erfolgt dabei über die Veränderung des aktuellen Auslenkradius. Hiermit kann auch eine Bewegung in der Haupteinsenkrichtung verknüpft sein, wodurch sich jedes Volumenelement der Werkzeugelektrode in bezug auf das Werkstück auf einer Kegelmantelfläche bewegt.

Ein derartiges Verfahren ist der EP-0 340 569-A1 zu entnehmen. Nachteilig ist dort jedoch, daß die Regelung des Erodierspaltes in zwei zueinander senkrechten Richtungen erfolgen muß.

Der Erfindung liegt die Aufgabe zugrunde, ein Bearbeitungsverfahren zum Erodieren anzugeben, das die Nachteile bekannter Verfahren nicht aufweist, regelungstechnisch einfach zu beherrschen ist und mit dem störsicher gearbeitet werden kann.

Diese Aufgabe wird mit einem Bearbeitungsverfahren nach dem Anspruch 1 gelöst.

Die Vorteile des erfindungsgemäßen Bearbeitungsverfahrens liegen in der vergrößerten Wirkfläche der Elektrode bei verbesserter Spaltregelung, da Stirn- und Umfangsfläche gleichzeitig erodieren und im besseren Kurzschlußverhalten, da bei einer Prozeßstörung die Elektrode durch die Spaltregelung mit allen Bearbeitungsflächen gleichzeitig auf der Resultierenden vom Werkstück freikommt. Mit dem erfindungsgemäßen Bearbeitungsverfahren ist es möglich, mit einem einzigen Erodiervorgang gleichzeitig einzusenken und aufzuweiten.

Mit Hilfe eines Ausführungsbeispieles soll die Erfindung anhand der Zeichnungen noch näher erläutert werden.

Es zeigt

Figur 1     schematisch eine Erodiermaschine;
Figur 2     einen Ausschnitt einer Erodiermaschine mit Steuerung und
Figur 3     eine Erodierelektrode mit Werkstück.

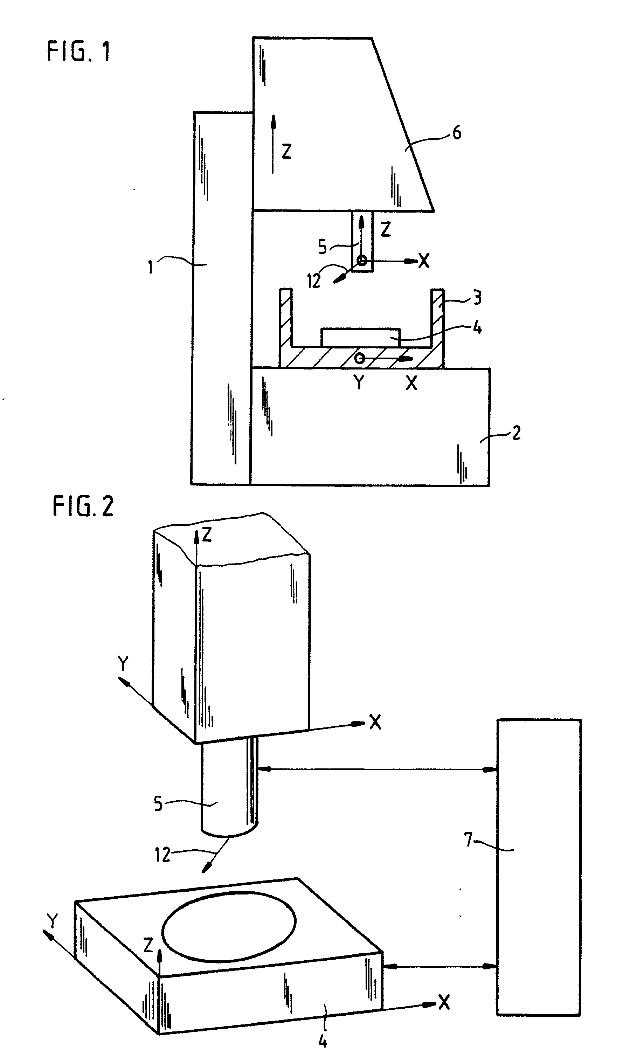

Eine in Figur 1 dargestellte Erodiermaschine 1 weist einen Tisch 2 auf, auf dem in einer Vorrichtung 3 ein Werkstück 4 angeordnet ist, das von einer Werkzeugelektrode 5 bearbeitet werden soll. Die Werkzeugelektrode - nachstehend nur noch mit Elektrode 5 bezeichnet - befindet sich in einem Träger 6 und ist zusammen mit bzw. in diesem Träger 6 in allen Koordinatenrichtungen verschiebbar.

In Figur 2 ist ein Ausschnitt der Erodiermaschine gezeigt, in dem symbolisch das Werkstück 4 und die Elektrode 5 dargestellt sind, deren Relativbewegungen von einer Steuerung 7 gesteuert werden, die auch für die Regelung des Erodierspaltes vorgesehen ist.

In Figur 3 sind nurmehr das Werkstück 4 und die Elektrode 5 dargestellt. Die Elektrode 5 hat die Form einer Scheibe mit dem Radius 8 und der Dicke 9, durch die die Tiefe der Einsenkung bestimmt wird. Es wird daher nachfolgend von der Tiefe 9 gesprochen.

Gemäß der Erfindung wird eine Einsenkung mit größeren Abmessungen als die der Elektrode 5 in einem Erodiervorgang hergestellt. Dazu wird der Einsenkung in Richtung der Erodierachse, die durch einen Pfeil 11 kenntlich gemacht ist, eine Planetärbewegung der Elektrode 5, die durch einen Pfeil 10 symbolisiert wird, überlagert.

Aus dem Verhältnis der Richtungskomponenten der lateralen Bewegung und der Bewegung in Richtung der Erodierachse wird die Richtung der Resultierenden 12 bestimmt. Aus den Beträgen dieser Komponenten, die durch Radius 8 und Tiefe 9 bestimmt sind, wird der Betrag der Resultierenden 12 gebildet.

Bei der Überlagerung der Planetär - mit der Erodierachs-Richtung beschreibt die Resultierende 12 eine Kegelmantelfläche, was durch die Mehrfachdarstellung der Resultierenden 12 kenntlich gemacht wird.

Die Regelung des Erodierspaltes erfolgt auf der Resultierenden 12, so daß bei Prozeßstörungen auch die Rückzugsbewegungen der Elektrode 5 auf der Resultierenden 12 erfolgen. Damit kommen sowohl die Stirn- als auch die Umfangsfläche der Elektrode 5 gleichzeitig vom Werkstück frei.

Abhängig vom Erodierprozeß kann die Winkelgeschwindigkeit geändert werden. D.h., daß im Leerlaufbetrieb die Winkelgeschwindigkeit groß ist, bei guter Erosion wird eine mittlere Winkelgeschwindigkeit vorgegeben und bei Rückzugstendenzen auf der Resultierenden kann sich die Winkelgeschwindigkeit bis auf Stillstand verringern.

## Bezugszeichenliste

====================

| 1 | Erodiermaschine |
| 2 | Tisch |
| 3 | Vorrichtung |
| 4 | Werkstück |
| 5 | Elektrode |
| 6 | Träger |
| 7 | Steuerung |
| 8 | Radius |
| 9 | Tiefe |
| 10 | Pfeil |
| 11 | Pfeil |
| 12 | Resultierende |

## Patentansprüche

1. Bearbeitungsverfahren zum Erodieren von Werkstücken, bei dem die Relativbewegung einer Werkzeugelektrode gleichzeitig planetär in lateraler Richtung und in der Erodierachs-Richtung erfolgt, dadurch gekennzeichnet, daß die Regelung des Erodierspaltes auf der Resultierenden (12) beider Richtungskomponenten erfolgt.

2. Bearbeitungsverfahren nach Anspruch 1, dadurch gekennzeichnet, daß der Betrag der Resultierenden (12) durch die Beträge der Richtungskomponenten gezielt einstellbar ist.

3. Bearbeitungsverfahren nach Anspruch 1, dadurch gekennzeichnet, daß die Richtung der Resultierenden (12) durch das Verhältnis der Richtungskomponenten gezielt einstellbar ist.

4. Bearbeitungsverfahren nach Anspruch 1, dadurch gekennzeichnet, daß die Resultierende (12) bei der Herstellung einer Einsenkung eine Kegelmantelfläche beschreibt.

5. Bearbeitungsverfahren nach Anspruch 1, dadurch gekennzeichnet, daß bei Prozeßstörungen die Rückzugsbewegung der Werkzeugelektrode (5) auf der Resultierenden (12) erfolgt.

6. Bearbeitungsverfahren nach Anspruch 1, dadurch gekennzeichnet, daß die Winkelgeschwindigkeit der Werkzeugelektrode (5) prozeßabhängig gesteuert wird.

7. Bearbeitungsverfahren nach Anspruch 1, dadurch gekennzeichnet, daß die laterale Richtung und die Erodierachs-Richtung (11) senkrecht zueinander verlaufen.

8. Bearbeitungsverfahren nach Anspruch 1, dadurch gekennzeichnet, daß die laterale Richtung und die Erodierachs-Richtung (11) einen beliebigen Winkel einschließen.

FIG. 1

FIG. 2

FIG. 3

**Europäisches Patentamt**

# EUROPÄISCHER RECHERCHENBERICHT

Nummer der Anmeldung

## EP 90 10 6712

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 350 166  (ATELIERS DES CHARMILLES)<br>* Seite 3, Zeile 31 - Seite 5, Zeile 23 *<br>– – – | 1,4,6,7 | B 23 H 7/28 |
| A | FR-A-2 401 737  (CAREL FOUCHE LANGUEPIN)<br>* Seite 3, Zeile 34 - Seite 4, Zeile 30 *<br>– – – – – | 1 | |
| | | | **RECHERCHIERTE SACHGEBIETE (Int. Cl.5)**<br><br>B 23 H |

Der vorliegende Recherchenbericht wurde für alle Patentansprüche erstellt

| Recherchenort | Abschlußdatum der Recherche | Prüfer |
|---|---|---|
| Den Haag | 12 November 90 | DAILLOUX C. |